# EUROPÄISCHE PATENTSCHRIFT

(11) **EP 0 514 342 B1**
(45) Veröffentlichungstag und Bekanntmachung des Hinweises auf die Patenterteilung: **28.06.1995**
(21) Anmeldenummer: 92810362.1
(22) Anmeldetag: 14.05.1992
(51) Int. Cl.: F16B 13/06, F16B 13/10, F16B 13/00

(54) **Spreizdübel mit reibungsmindernder Beschichtung**
Expansible dowel with anti-attrition coating
Cheville expansible avec une enduction diminuant la friction

(30) Priorität: 17.05.1991 DE 4116149
(43) Veröffentlichungstag der Anmeldung: 19.11.1992
(73) Patentinhaber: HILTI Aktiengesellschaft, 9494 Schaan (LI)
(72) Erfinder: Schiefer, Erwin, W-8000 München 70 (DE)
(74) Vertreter: Wildi, Roland

(56) Entgegenhaltungen:
- AT-B- 358 257
- CH-A- 493 748
- DE-A- 2 625 492
- DE-A- 3 731 818
- DE-A- 3 844 113
- GB-A- 1 333 893

## Beschreibung

Die Erfindung betrifft einen Spreizdübel mit Ankerbolzen, dessen zylindrischer Schaft im einen Endbereich in Setzrichtung eine Erweiterung aufweist und an dem dieser Erweiterung abgewandten Ende Angriffsmittel zur Lastaufnahme trägt, wobei der Ankerbolzen zumindest entlang eines Teiles seines Schaftes von einer relativ dazu verschiebbaren Spreizhülse umgeben ist, die wenigstens einen zum setzrichtungsseitigen Ende hin offenen Längsschlitz aufweist und an ihrer Aussenkontur mit radial abstehenden Vorsprüngen versehen ist.

Spreizdübel dieser Art dienen beispielsweise zur Befestigung von Werkstücken an einem Bauteil, wobei die im Bauteil angeordnete Bohrung ebenso wie die Bohrung in dem zu befestigenden Werkstück so gross bemessen ist, dass der Spreizdübel nach dem Anordnen des Werkstückes auf dem Bauteil in der vorgesehenen Befestigungslage durch die dann in Flucht liegenden Bohrungen eingeschoben werden kann. Durch Drehen eines beispielsweise als Mutter ausgebildeten Angriffsmittels mit einem geeigneten Werkzeug wird der Ankerbolzen mit seiner Erweiterung in die Spreizhülse hineingezogen, so dass sich diese durch Aufweiten in der Bohrung des Bauteiles verankert.

Aus der GB-PS 1 333 893 ist ein Dübel bekannt, bei dem der Ankerbolzen am bohrungsinneren Ende der Spreizhülse angeordnet ist und die Spreizhülse deshalb beim Setzen am bohrungsinneren Ende auseinandergedrängt wird. Der Spreizdübel besteht aus einem länglichen, zylindrischen Ankerbolzen, der an einem Ende eine konische Erweiterung hat, und aus einer auf dem Ankerbolzen angebrachten, aufweitbaren Spreizhülse. Diese weist Vorsprünge auf, die vom Innern der Spreizhülse nach aussen geprägt sind. Die Vorsprünge sind so angeordnet, dass sie über den grössten Umfang des Ankerbolzens bzw. der Spreizhülse hinausragen.

Die nach erfolgter Setzung des Spreizdübels entstehende Spreizkraft bewirkt eine im wesentlichen gleich grosse Reibkraft zwischen dem Ankerbolzen und der Spreizhülse, sowie zwischen der Bohrlochwandung und der Spreizhülse. Somit weist dieser Spreizdübel ein äusserst schlechtes Nachspreizverhalten beispielsweise in der gerissenen Zugzone auf, da ein Verschieben des Ankerbolzens gegenüber der Spreizhülse nicht garantiert werden kann. Aufgrund der im wesentlichen gleich grossen Reibkräfte kann sich die Spreizhülse zusammen mit dem Ankerbolzen gegenüber der Bohrlochwand verschieben. Die auf der Spreizhülse angeordneten Vorsprünge dienen dem ortsfesten Halten der Spreizhülse in der Bohrung, wenn der Spreizdübel befestigt wird. Diese Vorsprünge sind nicht auf dem radial aufweitbaren Bereich der Spreizhülse angeordnet und erfüllen somit keine entsprechende Festhaltefunktion in der gerissenen Zugzone.

Zudem ist es bei Spreizdübeln dieser Art aus nichtrostendem Stahl bekannt, dass sie zu Funktionsstörungen infolge "Fressen" zwischen Ankerbolzen und Spreizhülse neigen. Insbesondere bei Spreizdübeln, die dort eingesetzt werden, wo Risse in den Zugzonen entstehen können, ist die Vermeidung dieser "Fress-Erscheinungen" wichtig, um ein sicheres Nachspreizen im Riss zu gewährleisten.

Aus der DE-A 2 626 076 ist ein Spreizdübel bekannt, welcher gattungsmässig von dem einleitend geschilderten Spreizdübel abweicht. Dieser weiterhin bekannte Spreizdübel weist einen Spreizkörper und eine Spreizhülse auf, wobei die Spreizhülse über einen Teil ihrer Länge geschlitzt ist und deren zentrale Bohrung im geschlitzten Bereich gegen das vordere Ende hin verjüngt ausgebildet ist. Zum Setzen des Spreizdübels wird der Spreizkörper in die Spreizhülse hineingetrieben, wobei zur Erleichterung dieses Eintreibens Bereiche des Spreizdübels eine Schicht auf Basis eines Epoxydharzes aufweisen.

Der Erfindung liegt die Aufgabe zugrunde, einen Spreizdübel zu schaffen, der wirtschaftlich herstellbar ist und ein sicheres Nachspreizverhalten in der gerissenen Zugzone aufweist.

Erfindungsgemäss wird die Aufgabe dadurch gelöst, dass an der Aussenkontur wenigstens ein von zwei, in Längsrichtung hintereinander liegenden Vorsprüngen gebildetes Paar angeordnet ist und wenigstens eine der von der Innenkontur der Spreizhülse und der Aussenkontur des Schaftes durch das Zusammenwirken gebildeten Kontaktflächen mit einer reibungsmindernden Beschichtung versehen ist.

Dank der erfindungsgemässen Ausbildung ist die Reibung zwischen dem Ankerbolzen und der Spreizhülse geringer als wie die Reibung zwischen der Bohrlochwandung und der Spreizhülse. Zudem wird das beim Setzen des Spreizdübels nachteilig wirkende Mitdrehen der Spreizhülse vermieden.

Vorzugsweise ist die reibungsmindernde Beschichtung ein Gleitlack. Mittels eines Gleitlackes wird die meist vollständige Trennung der Gleitflächen durch einen Schmierfilm erreicht. Dieser Gleitlack kann mit einer Dicke von 5 bis 30 Mikrometer aufgetragen werden. Die Beschichtung kann auch in Form von Metallbeschichtungen durch Aufspritzen zB von Molybdän oder Aluminium erfolgen. Es handelt sich dabei um lamellare Festschmierstoffe mit oder ohne Schichtgitterstruktur. Zu den Festschmierstoffen mit Schichtgitterstruktur gehören Graphit, Molybdänsulfid und Wolframdisulfid. Zu den Festschmierstoffen ohne Schichtgitterstruktur zählen unter anderem Polymere wie zB Polytetrafluoräthylen und Polyäthylene.

Die breiteste Anwendung finden die lamellaren Festschmierstoffe Molybdänsulfid und Graphit. Die Schmierwirksamkeit beruht auf der Schichtgitterstruktur und den elektrischen Ladungen der Grenzschicht. Das Lamellenpaket verträgt hohe Querbelastungen bei geringer Längsverschiebereibung.

Zweckmässigerweise ist die Beschichtung ein alkalibeständiges Harzsystem. Dadurch ist die Beschichtung chemisch beständig gegen sämtliche schädliche Einflüsse, die vom Beton, von der Umgebung bzw. Umwelt und von der Witterung ausgehen können.

Vorteilhafterweise ist das Harzsystem auf der Basis eines Epoxydharzes aufgebaut. Es handelt sich dabei um ein Duroplast, das verschiedene Vorteile wie zB gute Haftung auf nahezu allen Werkstoffen, hohe Chemikalienbeständigkeit vor allem gegen Alkalien, hohe Festigkeit und ein günstiges Alterungsverhalten aufweist.

Vorteilhafterweise ist das Harzsystem auf der Basis eines Polyurethanharzes aufgebaut. Es handelt sich dabei ebenfalls um ein Duroplast, dessen kennzeichnende Eigenschaften vor allem die geringe Schwindung, die gute Haftung auf allen Werkstoffen, die hohe Abriebfestigkeit, die geringe Wasseraufnahme und die hohe Chemikalien- bzw. Witterungsbeständigkeit sind.

Zweckmässigerweise enthält das Harzsystem ein Feststoffschmiermittel. Hierzu eignen sich besonders Molybdänsulfid, Graphit und Polytetrafluoräthylen. Dies sind Schmiermittel mit bzw. ohne Schichtgitterstruktur. Zwischen den einzelnen Schichten bestehen nur geringe Kohäsionskräfte, die ein leichtes Verschieben der Schichten aufeinander ermöglichen. Die lamellaren Festschmierstoffe mit Schichtgitterstruktur wie Molybdänsulfid und Graphit werden bevorzugt verwendet.

Vorzugsweise ist die Beschichtung auf der Aussenkontur des Schaftes angeordnet. Aus herstellungstechnischen Gründen und aus Gründen der Wirtschaftlichkeit ist die Anordnung der Beschichtung auf der Aussenkontur des Schaftes vorzuziehen. Da es sich im Gegensatz zur Spreizhülse bei dem Schaft um eine geschlossene Oberfläche handelt, ist das Anbringen einer gleichmässig dicken Beschichtung möglich.

Zweckmässigerweise sind drei, die Vorsprünge bildende Paare gleichmässig über den Umfang der Spreizhülse verteilt angeordnet. Aus Gründen der besseren Spreizbarkeit der Spreizhülse ist diese drei mal zumindest teilweise vom setzrichtungsseitigen Ende her längsgeschlitzt. Auf den dabei entstehenden Spreizsegmenten sind in deren Längssrichtung jeweils zwei, ein Paar bildende Vorsprünge hintereinander angeordnet.

Die Vorsprünge überragen die Spreizhülse in radialer Richtung und gewährleisten die Aufrechterhaltung des kontaktes der Spreizhülse zur Bohrlochwand, wenn sich der Riss öffnet. Somit kann die Spreizhülse ihre axiale Lage beibehalten und die Nachspreizfunktion gewährleisten.

Vorteilhafterweise sind die Vorsprünge in Setzrichtung abgeschrägt und entgegen der Setzrichtung schaftkantig ausgebildet. Damit der Spreizdübel leichter in eine Bohrung im Bauteil eingeführt bzw. durch eine Bohrung im Werkstück durchgeführt werden kann, sind beide Vorsprünge in Einführrichtung abgeschrägt. Damit das Nachspreizverhalten des Spreizdübels in der gerissenen Zugzone gewährleistet werden kann, sind die Vorsprünge widerhakenähnlich ausgebildet. Bei einer axialen Bewegung des Spreizdübels entgegen der Setzrichtung verkrallen sich somit diese Vorsprünge besser in der Bohrlochwand und ermöglichen somit eine axiale Verschiebung des Ankerbolzens gegenüber der Spreizhülse.

Vorzugsweise sind die in Setzrichtung vorderen Vorsprünge bis zur Aussenkontur der Spreizhülse abgeschrägt. Der Winkel der abgeschrägten Noppen liegt zwischen 10° und 30° zur Dübelhauptachse. Es wird somit eine dem Einführen des Spreizdübels dienliche Kontur geschaffen, die ein Zusammendrücken in radialer Richtung der Spreizhülse gewährleistet. Somit ist der in Setzrichtung vorne liegende Durchmesser der Spreizhülse während des Einsetzvorganges kleiner als der Durchmesser am gegenüberliegenden Ende der Spreizhülse.

Die im vorderen Bereich der Spreizhülse angeordneten Vorsprünge sind als Ringzacken ausgebildet, die sich beim Anspannen des Ankerbolzens in die Bohrlochwand eingraben. Die hinter den Ringzacken liegenden Vorsprünge sind als Noppen ausgebildet, die bei zunehmender Verspreizung ebenfalls in die Bohrlochwandung gedrückt werden. Der Durchmesser der Noppen und die in Umfangsrichtung verlaufende Erstreckung der Ringzacken entspricht etwa der ein- bis zweifachen Wandstärke der Spreizhülse.

Bei grösseren Verschiebungen des Ankerbolzens, vor allem in der gerissenen Zugzone, halten die Noppen den Kontakt zur Bohrlochwand aufrecht. Dies ist insbesondere dann von wesentlicher Bedeutung, wenn durch die im Längsschnitt bananenförmige Deformation der Spreizhülse die Ringzacken den Kontakt zur Bohrlochwand allmählich verlieren.

Die bevorzugte Höhe von Ringzacke und Noppe entspricht etwa der 0,4- bis 0,5-fachen der Wandstärke der Spreizhülse.

Die Erfindung wird anhand eines Ausführungsbeispieles näher erläutert. Es zeigen:
- Fig. 1: einen erfindungsgemässen Spreizdübel in Ansicht;
- Fig. 2: eine vergrösserte Darstellung der setzrichtungsseitigen Erweiterung des Schaftes des Spreizdübels ohne Spreizhülse;
- Fig. 3: eine vergrösserte, geschnittene Darstellung der Spreizhülse.

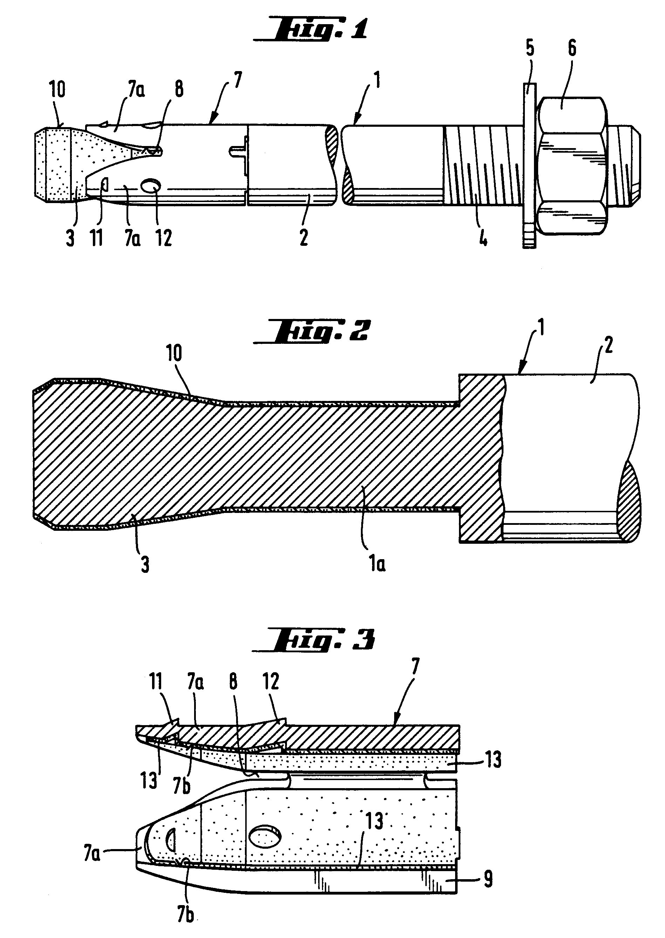

Die Fig. 1 zeigt einen Spreizdübel mit Ankerbolzen 1, dessen zylindrischer Schaft 2, eine Erweiterung 3 und am gegenüberliegenden Ende ein Angriffsmittel mit Gewinde 4, Beilagscheib e 5 und Mutter 6 aufweist. Der Ankerbolzen 1 ist zumindest entlang eines Teiles seines Schaftes 2 im Bereich der Erweiterung 3 zylindrisch hinterschnitten. Dieser Bereich ist von einer verschiebbaren Spreizhülse 7 umgeben. Die Spreizhülse 7 ist zweimal teilweise und einmal ganz vom setzrichtungsseitigen Ende her längsgeschlitzt. Zwei Schlitze 8 erstrecken sich über die Hälfte und der Schlitz 9 über die gesamte Länge der Spreizhülse 7. Die Spreizhülse 7 ist dadurch in drei Spreizsegmente 7a unterteilt, wobei auf jedem der Spreizelemente 7a zwei in Längsrichtung hintereinander liegende Vorsprünge 11, 12 angeordnet sind. Der gesamte vordere Bereich des Ankerbolzens 2 inklusive des Aufnahmebereiches für die Spreizhülse 7 ist beschichtet.

In der Fig. 2 ist die setzrichtungsseitige Erweiterung 3 des Ankerbolzens 1 in vergrösserter Darstellung ersichtlich. Von einem zylindrischen hinterschnittenen Teil 1a des Ankerbolzens 1 erstreckt sich die Erweiterung 3 konisch zum Aussendurchmesser des Ankerbolzens 1. Der gesamte vordere Bereich inklusive des Aufnahmebereiches für die Spreizhülse 7 ist mit einer reibungsmindernden Beschichtung 10 versehen.

Die Fig. 3 zeigt einen Schnitt durch die Spreizhülse 7. Dabei sind die auf den Spreizsegmenten 7a angeordneten Vorsprünge 11, 12 gut erkennbar. Die im setzrichtungsseitigen Bereich vorderen Vorsprünge 11 sind Ringzacken. Die weiteren Vorsprünge 12 sind in Form von Noppen ausgebildet. Beide Vorsprünge 11, 12 sind in Eintreibrichtung angeschrägt, was während des Einschiebvorganges eine radiale Verkleinerung der Spreizhülse 7 im vorderen Bereich bewirkt. Entgegen der Setzrichtung sind die Vorsprünge 11, 12 scharfkantig ausgebildet, so dass sich diese beim Anspannen des Ankerbolzens in die Bohrlochwand eingraben können.

Der innere Durchmesser der Spreizhülse 7 erweitert sich zum setzrichtungsseitigen Ende stufenweise. Die auf den Spreizsegmenten 7a angeordneten Ringzacken befinden sich in diesem sich konisch erweiternden Bereich 7b. Die Noppen sind in dem Bereich der Spreizhülse 7 angeordnet, in dem die Wandstärke die maximale Dicke aufweist.

Die Spreizhülse 7 weist auf ihrer inneren Oberfläche eine reibungsmindernde Beschichtung 13 auf, die vom Aufbau her identisch mit der Beschichtung 10 gemäss Fig. 2 sein kann.

## Patentansprüche

1. Spreizdübel mit Ankerbolzen (1), dessen zylindrischer Schaft (2) im einen Endbereich in Setzrichtung eine Erweiterung (3) aufweist und an dem dieser Erweiterung (3) abgewandten Ende Angriffsmittel (4, 5, 6) zur Lastaufnahme trägt, wobei der Ankerbolzen (1) zumindest entlang eines Teiles seines Schaftes (2) von einer relativ dazu verschiebbaren Spreizhülse (7) umgeben ist, die wenigstens einen zum setzrichtungsseitigen Ende hin offenen Längsschlitz (8, 9) aufweist und an ihrer Aussenkontur mit radial abstehenden Vorsprüngen (11, 12) versehen ist, **dadurch gekennzeichnet,** dass an der Aussenkontur wenigstens ein von zwei in Längsrichtung hintereinander liegenden Vorsprüngen (11, 12) gebildetes Paar angeordnet ist und wenigstens eine der von der Innenkontur der Spreizhülse (7) und der Aussenkontur der Erweiterung (3) des Schaftes (2) durch das Zusammenwirken gebildeten Kontaktflächen mit einer reibungsmindernden Beschichtung (10, 13) versehen ist.

2. Spreizdübel nach Anspruch 1, dadurch gekennzeichnet, dass die Beschichtung (10, 13) ein Gleitlack ist.

3. Spreizdübel nach Anspruch 1 oder 2, dadurch gekennzeichnet, dass die Beschichtung (10, 13) ein alkalibeständiges Harzsystem ist.

4. Spreizdübel nach Anspruch 3, dadurch gekennzeichnet, dass das Harzsystem auf der Basis eines Epoxydharzes aufgebaut ist.

5. Spreizdübel nach Anspruch 3, dadurch gekennzeichnet, dass das Harzsystem auf der Basis eines Polyurethanharzes aufgebaut ist.

6. Spreizdübel nach Anspruch 4 oder 5, dadurch gekennzeichnet, dass das Harzsystem ein Feststoffschmiermittel enthält.

7. Spreizdübel nach einem der Ansprüche 1 bis 6, dadurch gekennzeichnet, dass die Beschichtung (10, 13) auf der Aussenkontur des Schaftes (2) angeordnet ist.

8. Spreizdübel nach einem der Ansprüche 1 bis 7, dadurch gekennzeichnet, dass drei die Vorsprünge (11, 12) bildende Paare gleichmässig über den Umfang der Spreizhülse (7) verteilt angeordnet sind.

9. Spreizdübel nach einem der Ansprüche 1 bis 8, dadurch gekennzeichnet, dass die Vorsprünge (11, 12) in Setzrichtung abgeschrägt und entgegen der Setzrichtung scharfkantig ausgebildet sind.

10. Spreizdübel nach einem der Ansprüche 1 bis 9, dadurch gekennzeichnet, dass die in Setzrichtung vorderen Vorsprünge (11) bis zur Aussenkontur der Spreizhülse (7) abgeschrägt sind.

## Claims

1. An expansion anchor having an anchor bolt (1), the cylindrical shank (2) of which has an enlargement (3) at one end and carries engagement means (4, 5, 6) for supporting a load at its end remote from the said enlargement (3), wherein the anchor bolt (1) is surrounded along at least part of its shank (2) by an expansion sleeve (7), which is displaceable in relation thereto, which has at least one longitudinal slit (8, 9) open at its end in the direction of placement, and which is provided with radially protruding projections (11, 12) on its external profile, characterised in that at least one pair formed from two projections (11, 12) situated one behind the other in the longitudinal direction is disposed on the external profile, and at least one of the contact faces formed by cooperation of the internal profile of the expansion sleeve (7) and the external profile of the enlargement (3) of the shank (2) is provided with a friction-reducing coating (10, 13).

2. An expansion anchor according to claim 1, characterised in that the coating (10, 13) is a sliding lacquer.

3. An expansion anchor according to claim 1 or 2, characterised in that the coating (10, 13) is an alkali-resistant resin system.

4. An expansion anchor according to claim 3, characterised in that the resin system is synthesised based on an epoxy resin.

5. An expansion anchor according to claim 3, characterised in that the resin system is synethesised based on a polyurethane resin.

6. An expansion anchor according to 4 or 5, characterised in that the resin system contains a solid lubricant.

7. An expansion anchor according to any one of claims 1 to 6, characterised in that the coating (10, 13) is disposed on the external profile of the shank (2).

8. An expansion anchor according to any one of claims 1 to 7, characterised in that three pairs forming the projections (11, 12) are disposed uniformly distributed over the periphery of the expansion sleeve (7).

9. An expansion anchor according to any one of claims 1 to 8, characterised in that the projections (11, 12) are bevelled in the direction of placement and are sharp-edged opposite to the direction of placement.

10. An expansion anchor according to any one of claims 1 to 9, characterised in that the front projections (11) in the direction of placement are bevelled as far as the external profile of the expansion sleeve (7).

## Revendications

1. Cheville à expansion avec boulon d'ancrage (1) dont la tige cylindrique (2) présente dans une section terminale, dans la direction de pose, un élargissement (3) et, à l'extrémité opposée audit élargissement (3), des moyens d'attaque (4, 5, 6) pour la réception d'une charge, le boulon d'ancrage (1) étant entouré, au moins sur une partie de sa tige (2), par une douille expansible (7) déplaçable par rapport à cette dernière qui présente au moins une fente longitudinale (8, 9) ouverte en direction de l'extrémité située du côté pose et est munie, sur son contour extérieur, de saillies (11, 12) qui dépassent dans le sens radial, caractérisée en ce que sur le contour extérieur est disposée au moins une paire de saillies (11, 12) placées l'une derrière l'autre dans la direction longitudinale, et qu'au moins l'une des surfaces de contact formées par la coopération du contour intérieur de la douille expansible (7) et du contour extérieur de l'élargissement (3) de la tige (2), est munie d'un revêtement (10, 13) qui diminue la friction.

2. Cheville à expansion selon la revendication 1, caractérisée en ce que le revêtement (10, 13) est un vernis favorisant le glissement.

3. Cheville à expansion selon l'une la revendication 1 ou 2, caractérisée en ce que le revêtement (10, 13) est un système de résines résistant aux alcalis.

4. Cheville à expansion selon la revendication 3, caractérisée en ce que le système de résines est réalisé à base d'une résine époxy.

5. Cheville à expansion selon la revendication 3, caractérisée en ce que le système de résines est réalisé à base d'une résine polyuréthanne.

6. Cheville à expansion selon la revendication 4 ou 5, caractérisée en ce que le système de résines contient un lubrifiant solide.

7. Cheville à expansion selon l'une des revendications 1 à 6, caractérisée en ce que le revêtement (10, 13) est appliqué sur le contour extérieur de la tige (2).

8. Cheville à expansion selon l'une des revendications 1 à 7, caractérisée en ce que trois paires formant les saillies (11, 12) sont réparties uniformément sur la périphérie de la douille expansible (7).

9. Cheville à expansion selon l'une des revendications 1 à 8, caractérisée en ce que les saillies (11, 12) sont chanfreinées dans la direction de pose et munies d'arêtes vives dans le sens opposé à la direction de pose.

10. Cheville à expansion selon l'une des revendications 1 à 9, caractérisée en ce que les saillies (11) antérieures dans la direction de pose sont chanfreinées jusqu'au contour extérieur de la douille expansible (7).
